# EUROPEAN PATENT APPLICATION

(11) **EP 2 778 949 A2**
(43) Date of publication of application: **17.09.2014**
(21) Application number: 14159433.3
(22) Date of filing: 13.03.2014
(51) Int. Cl.: G06F 17/21

(54) **Font delivery service**

(30) Priority: 13.03.2013 US 201313798498
(71) Applicant: Celartem, Inc., Portland OR 97201 (US)
(72) Inventor: Schwanitz, William E., Portland, OR 97201 (US); Russell, Steven, Portland, OR 97201 (US); Slater, Chadlee, Portland, OR 97201 (US)
(74) Representative: Thompson, Andrew John

(57) **Abstract**

A method, system, and architecture for a font service and a software development kit (SDK) to provide developers with the means to design user-interfaces and content using a wide variety of font typefaces. The SDK may download a font from a font service as needed and activate the font to be rendered in the software application's user interface or other textual content within the application. A subscription service may be provided which comprises user account information or other data relating to permissions for one or more client devices to access one or more font files located in a font library. Further, one or more font files may be optimized according to an operating system in which the target application is operating and/or a screen resolution of a client device on which the target application is operating.

## Description

### TECHNICAL FIELD

Aspects of the present disclosure relate to delivering one or more fonts for use in an application. For example, some aspects of the present disclosure relate to a font service and a software development kit used to deliver a variety of font typefaces for software applications.

### BACKGROUND

Operating systems installed on desktop computers, laptop computers, tablets, mobile phones, and the like, comprise a limited number of preloaded system fonts. Thus, developers of applications ultimately used in these operating systems have a limited number of fonts to choose from when coding for user interfaces and/or other textual content rendered within the applications. The number of fonts from which these developers may choose from is particularly limited when an application will ultimately be installed on mobile devices. That is, because storage capacity on these mobile devices may be more limited as compared to, e.g., desktop computers, these devices may have a more limited number of system fonts installed for a developer to choose from.

Accordingly, there remains a need to provide software developers and the like with expanded font options that may be used in applications, particularly with respect to applications ultimately installed on mobile devices. Further, there remains a need to optimize delivered font files according to a target device in order to reduce bandwidth and/or storage capacity necessary to transmit, store, and activate these delivered font files.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the disclosure relate to a method, system, and architecture for a font service and a software development kit (SDK) to provide developers and the like with the means to design user-interfaces and content using a wide variety of font typefaces. In some embodiments, the SDK enables the use of one or more of the font typefaces in the developer's application. For example, when an application is launched, the SDK (included in the code of the developer's application) may download a requested font file from a font service as needed and activate the font in the software application such that user interfaces or other textual content within the application is rendered in the requested font.

According to another aspect, a subscription service may be provided at the font service. The subscription service may comprise account information or other data relating to permissions for one or more client devices to access one or more font files located in a font library. In some embodiments, the subscription service may comprise information regarding a licensing agreement between an application developer and the font service. Accordingly, in some embodiments, subscription information may be referenced to determine permissions (or lack thereof) of a target application before a font file is transferred to a client device.

According to yet another aspect, one or more font files may be optimized for an operating system in which the target application is operating and/or a screen resolution of a display on a target client device. Optimizing a font file may comprise reducing the size of the font file in order to reduce bandwidth needed to transmit the font file, reduce local storage capacity needed to store the font file, and/or reduce a time required to render textual content using the font file. In some embodiments, optimization may comprise removing font hinting, OpenType features, and/or other attributes of a font file which is not required by an operating system and/or display of the target client device.

### BRIEF DESCRIPTION OF THE DRAWINGS

A more complete understanding of the present invention and the advantages thereof may be acquired by referring to the following description in consideration of the accompanying drawings, in which like reference numbers indicate like features, and wherein:
FIG. 1 illustrates an example computer system and environment in which one or more aspects of the present disclosure may be practiced;
FIG. 2 is a schematic of a mobile device and font service according to one or more aspects of the present disclosure;
FIG. 3 is a flowchart depicting a method of launching an application utilizing one or more aspects of the present disclosure; and
FIG. 4 is a flowchart depicting a method of optimizing a font file to be used by the launched application of FIG. 3 according to one or more aspects of the present disclosure.

### DETAILED DESCRIPTION

Aspects of the disclosure relate to systems, apparatuses, methods, and computer-readable media for providing multiple fonts to a software developer and the like to be ultimately used in user interfaces and/or other rendered textual content in applications operating on client devices. A font, as used herein, may refer to a collection of characters in a typeface, and, in some embodiments, may refer to a set of all characters defined for that particular typeface. A font may be provided in a font file which is processed by an operating system and rendered in an application. The font file may further comprise font hinting (e.g., instructing) which comprises mathematical instructions to an operating system to adjust the display of an outline font so that it lines up with a rasterized grid. In some embodiments (e.g., embodiments where a display of a client device comprises low screen resolutions), font hinting may be critical for producing clear, legible text. The font file may further comprise OpenType features as will be readily understood by those skilled in the art.

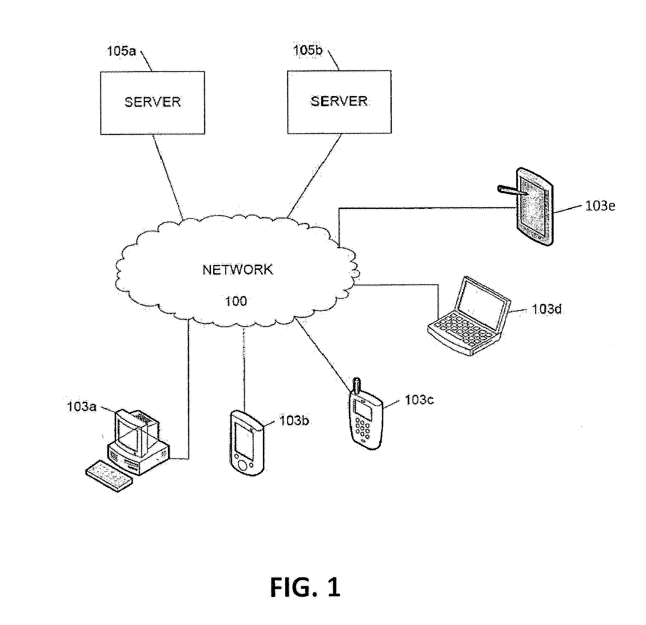

FIG. 1 illustrates a network environment in which font files may be transmitted and used to render text in user interfaces or other textual content in applications according to some aspects of the disclosure. Network 100 may be configured to provide communications between a variety of devices including client devices 103 and network servers 105. The communications may conform to one or more communication protocols including Internet Protocol (IP), Hyper Text Transfer Protocol (HTTP), File Transfer Protocol (FTP), and the like. Devices 103 may include stationary devices such as personal computer (PC) 103a as well as mobile communication devices such as personal data assistant (PDA) 103b, mobile phone 103c, laptop computer 103d, and tablet 103e. Network servers 105 may be configured to store and host various types of information including web pages, music content, video content, applications, and the like. In one configuration, network server 105a may be configured to host one or more font services.

According to one or more aspects, a font service and/or network server 105b may be configured to store font files. Font files may be created according to a variety of formats and comprise a variety of instructions (e.g., font hinting) and attributes (e.g., OpenType features) as will be readily understood by those skilled in the art. Accordingly, a single font file may be used across multiple platforms on multiple devices (e.g., client devices 103a-103e) and each device may use the provided font hinting, OpenType features, and/or other attributes to render clear, legible text in the target application.

Similarly, a client device 103 may comprise a plurality of system fonts which may ultimately be used within applications to render textual content. These system fonts may be globally accessible on a client device 103 such that any application operating on a client device 103 may use one or more system fonts to render textual content. For example, a software developer or the like, when developing an application, may include code to reference one or more of these system fonts when displaying textual content, and the corresponding application, when launched, may access a font file on client device 103 comprising the coded-for system font. In such an example, the textual content in the application will thus be rendered on a display in this system font. However, if a software developer or the like wishes to render textual content in a font other than one of the provided system fonts, she may either be required to provide a font file with the application, or require an end user to download or otherwise install an additional font file on client device 103. For example, software developers may wish to render textual content in a font other than one of the provided system fonts, but if client device 103 does not have additional font files preloaded, then the textual content may ultimately be rendered in one of the provided system fonts (e.g., a default font) or the client device 103 may be required to, e.g., download additional font files before rendering the textual content.

According to one or more aspects of the disclosure, a font service is provided to allow a software developer or the like to use one or more fonts not provided as a default system font to display textual content in an application. For example, in some embodiments a software developer may choose a font they wish to use when rendering textual content from a database comprising fonts that may not be preloaded on client devices 103, and "rent" this font from a font service. In such embodiments, rather than requiring an end user to purchase and/or install numerous additional font files on client device 103 in order to render textual content in a font other than a default system font, this font service may allow a developer to code for a desired font not included as a system font which may then be used only by the specific application (e.g., rented by the application).

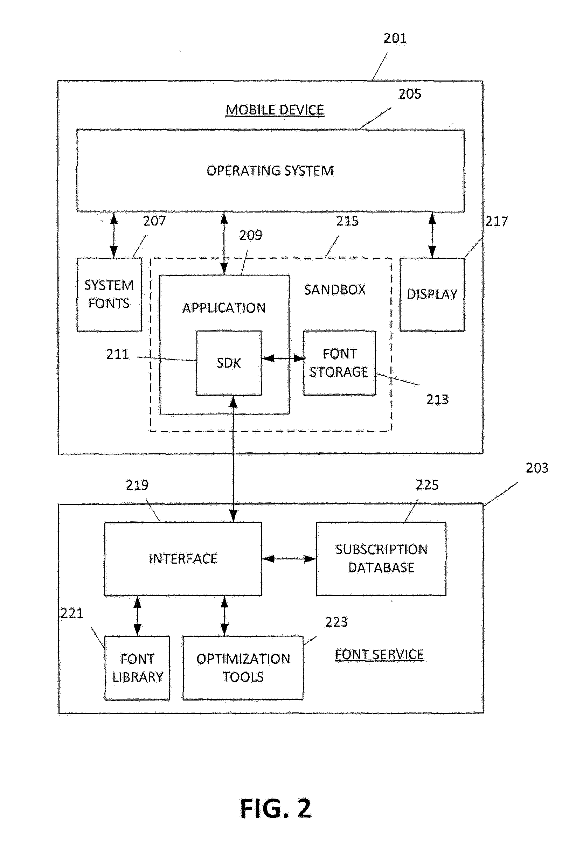

FIG. 2 is a schematic of a mobile device 201 (as one example of client device 103) in communication with font service 203 (as one example of a font rental service) according to one or more aspects of the disclosure. In some embodiments, font service 203 may be a system and architecture that provisions user accounts, provides privileged account information to a software development kit (SDK) 211, hosts physical font files, optimizes fonts before font delivery, and provides privileged access to the font files by SDK 211. Mobile device 201 may be any mobile device well known in the art and, in some embodiments, may be, e.g., PDA 103b, mobile phone 103c, laptop computer 103d, or tablet 103e. Further, mobile device 201 may be in communication with font service 203 using any known method in the art (e.g., wireless, cellular, etc.) and, in some embodiments, may be in communication via network 100. Mobile device 201 may comprise operating system 205, system fonts 207, one or more applications 209, and display 217. Application 209 may be any program, widget, browser, software, etc., whose code is stored on mobile device 201 and, when executed by operating system 205, displayed on display 217. In some embodiments, application 209 may comprise user interfaces and/or other textual content. When this textual content is ultimately rendered on display 217, the content may be displayed in one or more system fonts 207 as discussed herein. These system fonts 207 may comprise one or more fonts stored in one or more font files in a memory or other storage space on mobile device 201 and may be globally available for use by any application. The number of system fonts 207 available may thus be inherently limited due to, e.g., space constraints, licensing restrictions, and/or other limitations of mobile device 201.

According to some embodiments of the disclosure, mobile device 201 may further comprise SDK 211 contained within application 209 (e.g., programmed within the code of application 209 by a software developer or the like) which may be used to assist in renting additional fonts (e.g., fonts in addition to the system fonts 207 and/or other fonts globally available on mobile device 201). SDK 211 as used herein broadly refers to a collection of programming interfaces, examples, documentation, and the like used to interface with font service 203 published and made available to, e.g., third-party software developers.

Mobile device 201 may also comprise sandbox 215 and font storage 213 used to store the rented fonts locally for use with application 209. As used herein, sandbox 215 refers to a security mechanism used for separating running applications, such as, e.g., application 209 from other applications operating on mobile device 201. Sandbox 215 may provide a tightly controlled set of resources for guest programs to run in, such as scratch space on disk and memory. Sandbox 215 may not allow or may heavily restrict, e.g., network access, the ability to inspect the host system, or the ability to read from input devices. Thus, sandbox 215 may be understood by those skilled in the art as a specific example of virtualization.

In one or more aspects of the present invention, operating system 205 operates application 209 and/or specific components of application 209 in sandbox 215 and thus segregates application 209 in order to prevent unauthorized access to one or more application 209 resources (e.g., in order to prevent other applications from accessing the rented fonts stored in font storage 213). For example, fonts downloaded for use by application 209 may be stored in sandbox 215 (e.g., stored in font storage 213 provided in sandbox 215) so as to prevent access to the rented font by other applications operating on the mobile device 201. Accordingly, each font acquired from the font service 203 may thus be only available for the particular use for which it was rented (e.g., in the depicted example, use in application 209) rather than being globally available for use by any application on mobile device 201. Segregating the font storage 213 in this manner from the other applications operating on mobile device 201 may be important for, e.g., font licensing and font license restrictions.

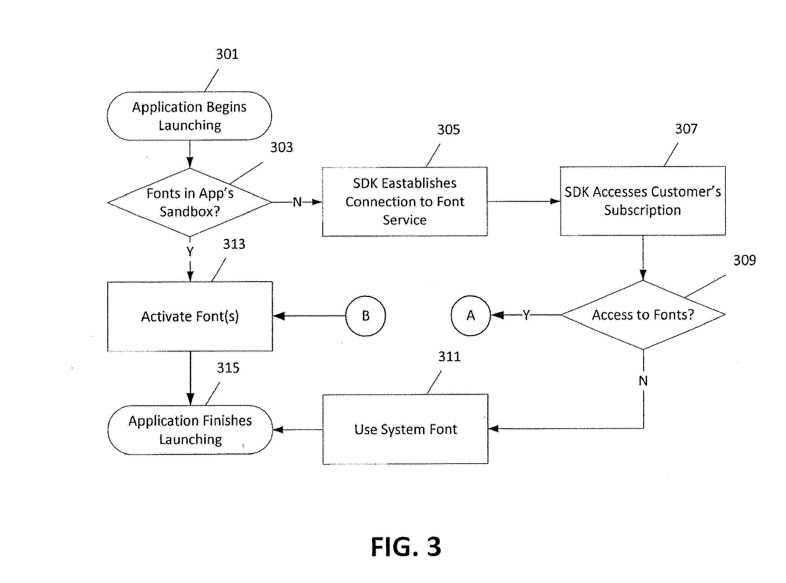

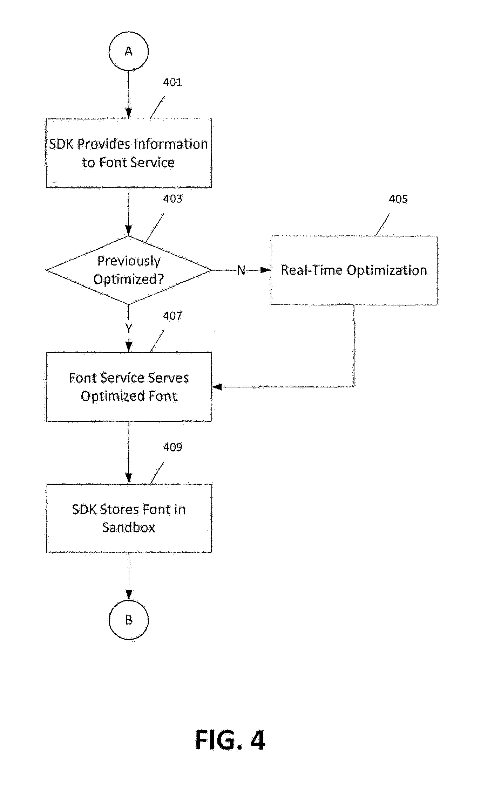

As illustrated in FIG. 2, SDK 211 is in communication with interface 219 of font service 203. Interface 219 communicates with SDK 211 thus assisting with downloading of requested fonts as will be discussed more fully with reference to FIGS. 3 and 4. Font service 203 may additionally comprise font library 221, optimization tools 223, and subscription database 225. Font library 221 may comprise a plurality of font files available to be rented and used in various applications (e.g., application 209). Because font library 221 may be stored on, e.g., one or more network servers 105, font library 221 may not be subjected to the same space constraints, etc., as system fonts 207 stored on mobile device 201. Accordingly, font library 221 may contain many more font files (and thus many more font options) than system fonts 207.

Font service 203 may comprise optimization tools 223. Optimization tools 223 may optimize any font file from font library 221 before transmitting it to mobile device 201. This optimization may be performed in order to, e.g., reduce bandwidth required to transmit the font file, reduce the memory or other storage space required to store the received font file locally on mobile device 201, and/or reduce the time required to render content using the font file on mobile device 201.

Optimization tools 223 may reduce the size of the font file using any desired method. In some embodiments, optimization tools 223 may remove font hinting not required and/or supported by the target application's 209 operating system 205. As used herein, font hinting (also known as instructing) refers to the use of mathematical instructions to adjust the display of an outline font so that it lines up with a rasterized grid. For example, at low screen resolutions, font hinting is necessary to produce a clear, legible text. Font files stored in font library 221 may thus comprise font hinting (instructing), but the target client device 103 may not require and/or support such font hinting. By determining, e.g., an operating system 205 and/or screen resolution of display 217 used by the target client device 103 (e.g., mobile device 201), optimization tools 223 may thus remove the unnecessary font hinting and the like from the font file when it is not required and/or supported and thus reduce, e.g., bandwidth required to transmit the font file, storage space (e.g., memory) required to store the font file locally, and/or time necessary to render textual content on mobile device 201.

In other embodiments, optimization tools 223 may be used to, e.g., remove OpenType features from the requested font file that may not ultimately be used by the target client device's 103 operating system 205. For example, some operating systems 205 may not support and/or utilize some or all OpenType features. In such embodiments, optimization tools 223 may remove the unused OpenType features from the requested font file before it is transmitted to a client device 103 (e.g., mobile device 201). Thus, as with font hinting as presented above, optimization tools 223 may thus reduce the size of the requested font file by removing unused OpenType features in order to reduce, e.g., bandwidth required to transmit the font file, storage space (e.g., memory) required to store the font file locally, and/or time necessary to render textual content on the client device 103.

Font service 203 may further comprise subscription database 225. Subscription database 225 may comprise information regarding user accounts, permissions, etc., and, in some embodiments, may comprise a list of which fonts a user is allowed access. For example, in some embodiments, a third-party software developer or the like may license a particular font from font library 221 to be used in her developed application (e.g., application 209). Accordingly, subscription database 225 may comprise information regarding the software developer's license agreement such that, when a client device 103 (e.g., mobile device 201) executes application 209 developed by the software developer, subscription database 225 may be referenced to determine if the application 209 has permission to use the requested font. Thus, in some embodiments, when the client device 103 (e.g., mobile device 201) executes application 209, SDK 211 may communicate with font service 203 via interface 219, which may then provide any licensed font files and/or permissions to use any licensed font files according to the terms provided in subscription database 225. However, if the subscription database 225 indicates the application 209 does not have permission to access the requested font file (e.g., the software developer has not established a subscription with font service 203 and/or has established a subscription that does not include the requested font), the font service 203 may deny access to the font file. In such embodiments, any textual content may ultimately be rendered on display 217 using a default system font 207 and/or an error message may be returned to a user indicating she does not have permission to access the requested font.

The interaction of mobile device 201 (or other client device 103) with font service 203 will be more readily understood with reference to FIGS. 3 and 4. FIG. 3 depicts one embodiment of high-level logic involved when a font file is downloaded and activated via, e.g., SDK 211. For example, at step 301 an application begins launching. The application may be any program, widget, browser, software, etc., and may be launched on, e.g., any of client devices 103a-103e. In some embodiments, the application launched at step 301 may be application 209 launched on mobile device 201. As discussed, the launched application 209 may comprise SDK 211 to assist in interactions with font service 203 in order to, e.g., to request a font to be used within the displayed application 209. At step 303, SDK 211 may determine if the requested font is stored within sandbox 215 corresponding to the launched application 209. For example, in some embodiments, once a font is delivered from font service 203, it may be stored locally in sandbox 215 such that it may be readily accessed during subsequent uses of application 209 (but not by other applications operating on, e.g., mobile device 201). Accordingly, at step 303, if the font has been previously accessed (e.g., downloaded) and stored in sandbox 215, SDK 211 may simply access the font locally at step 303 and move to step 313 as will be more fully discussed.

However, in embodiments where the requested font has not been previously stored in sandbox 215 (e.g., if this is the first time application 209 has been launched and thus SDK 211 has not previously requested the font and/or SDK 211 has been denied permission to store the font locally, etc.) then the method proceeds to step 305. At step 305, SDK 211 establishes a connection with font service 203. As discussed, the connection between SDK 211 and font service 203 may be achieved by any known method without departing from the scope of this disclosure. Solely by way of example, in embodiments where the launched application is, e.g., application 209 operating on mobile device 201, SDK 211 may establish a connection with the font service 203 via a wireless internet connection and/or a cellular data transmission connection. Further, and as illustrated in FIG. 2, font service 203 may comprise interface 219 for establishing a connection with SDK 211. Once the connection to the font service 203 is established at step 305, SDK 211 may request one or more font files from font service 203. For example, SDK 211 may request a font file associated with a font which a third-party software developer or the like has programmed to be used when rendering textual content in application 209.

At step 307, SDK 211 (via, e.g., interface 219) and/or font service 203 may access a customer's subscription by, e.g., referencing subscription database 225. Again, subscription database 225 may comprise information regarding one or more user accounts and/or permissions for accessing one or more fonts stored within font library 221. In some embodiments, subscription database 225 may comprise information regarding, e.g., a third-party developer's subscription and/or permissions for accessing one or more font files. At step 309, SDK 211 and/or font service 203 determines if the user has access to the requested font. For example, if a third-party developer has, e.g., licensed use of a particular font for use by any client device 103 executing her application 209, then SDK 211 and/or font service 203 may determine at step 309 (by referencing, e.g., subscription database 225) that the user does have access to the requested font. However, if SDK 211 and/or font service 203 determines the user does not have access to the requested font (e.g., a third-party developer does not have a subscription agreement encompassing the requested font), the method proceeds to the step 311.

At step 311, a system font 207 (e.g., a default font) is used in the place of the requested font. Thus, if the client device 103 (e.g., mobile device 201) is ultimately denied access to the requested font, any textual content rendered, e.g., on display 217 in application 209 may be rendered in one or more default system fonts 207. In some embodiments, falling back to this default system font 207 may be accomplished by, e.g., calling operating system 205 application programming interface (API) methods. As used herein, API may refer to a source-code based specification intended to be used as an interface by software components to communicate with each other. The API may include specifications for routines, data structures, object classes, variables, and the like. In other embodiments, rather than accessing a system font 207 to display the rendered content, application 209 may return, e.g., an error message or other prompt indicating that the client device 103 does not have access to the requested font.

However, if at step 309 SDK 211 and/or font service 203 determines the user does have access to the requested font (e.g., the requested font is included in the third-party developer's subscription), then the method may proceed to FIG. 4 (as indicated in FIG. 3 by the circled "A"). FIG. 4 is a flowchart of a method according to some aspects of the disclosure used to deliver the requested font from, e.g., font service 203 to mobile device 201. At step 401, SDK 211 provides information to font service 203. In some embodiments, the information provided at step 401 from SDK 211 to font service 203 may comprise, e.g., platform information, such as a version of operating system 205 used to run the target application 209 and/or a screen resolution of display 217 used to display the target application 209.

At step 403, SDK 211 and/or font service 203 may determine if the requested font has been previously optimized. As discussed, optimization of a font may comprise reducing a size of a font file in order to reduce, e.g., bandwidth required to transmit the font file, storage space (e.g., memory) required to store the font file, and/or time required to render the font on display 217. In some embodiments, optimization may comprise stripping a font file of, e.g., font hinting and other features that are not required by the operating system 205 of the client device 103 (e.g., mobile device 201) running the target application 209. In other embodiments, optimization may comprise removing, e.g., OpenType features that are not supported and/or required by the operating system 205 of the client device 103 (e.g., mobile device 201) running the target application 209. In some embodiments, font service 203 may store font files in, e.g., font library 221 that have been previously optimized for, e.g., a given operating system, screen resolution, etc. Thus, at step 403, SDK 211 and/or font service 203 may determine if the requested font file has been previously optimized for the target operating system 205 and/or display 217. If so, the font service 203 may serve the optimized font file at step 407 (to be discussed more fully) without further action. However, if the font file has not been previously optimized (e.g., has not been optimized for operating system 205 and/or display 217) then the method proceeds to step 405.

At step 405, SDK 211 and/or font service 203 performs real-time optimization of the requested font file. Specifically, the size of the requested font file may be reduced by, e.g., stripping the font file of font hinting, OpenType features, and/or other features not required by the target operating system 205 and/or display 217 as discussed herein. In some embodiments, step 405 may be performed by, e.g., referencing optimization tools 223 provided in font service 203. Once any necessary real-time optimization has been performed at step 405, the method proceeds to step 407 where the font service 203 may serve the optimized font file to, e.g., SDK 211 for use in rendering textual content of the target application 209.

In some embodiments, SDK 211 may store the received optimized font file locally in, e.g., font storage 213 in sandbox 215 at step 409. This may be accomplished by, e.g., calling operating system 205 API methods. In such embodiments, when application 209 is launched at a later time, the requested font may be available locally in, e.g., font storage 213 of sandbox 215 (but not available to, e.g., other applications operating on mobile device 201) in order to reduce start-up time and/or the time required to render textual content, etc.

Following step 409 (and returning to FIG. 3 as indicated by the circled "B"), SDK 211 activates the font in the target application 209 at step 313. As used herein, activation may refer to an act of changing the state of a font such that operating system 205 may discover the existence of the requested font and may use the font as if the font were installed in operating system 205 itself. In the depicted embodiment, activating the received font by SDK 211 at step 313 enables the use of the received font only within the target application 209 (as compare to a globally activated font, such as system font 207, which is available to all applications running on the device). In some embodiments, font activation at step 313 may comprise just-in-time font activation. In such embodiments, the font activation may occur as needed at the exact (or nearly exact) moment in the time the target application 209 needs to render the textual content.

At step 315, the target application 209 finishes launching. For example, in some embodiments, application 209 is displayed on display 217 with its user interfaces and/or other textual content rendered in the received font typeface from font service 203.

The methods and features recited herein may further be implemented through any number of computer readable media that are able to store computer readable instructions. Examples of computer readable media that may be used include RAM, ROM, EEPROM, flash memory or other memory technology, CD-ROM, DVD or other optical disk storage, magnetic cassettes, magnetic tape, magnetic storage, and the like.

Additionally or alternatively, in at least some embodiments, the methods and features recited herein may be implemented through one or more integrated circuits (ICs). An integrated circuit may, for example, be a microprocessor that accesses programming instructions or other data stored in a read only memory (ROM). In some such embodiments, the ROM stores programming instructions that cause the IC to perform operations according to one or more of the methods described herein. In at least some other embodiments, one or more of the methods described herein are hardwired into an IC. In other words, the IC is in such cases an application specific integrated circuit (ASIC) having gates and other logic dedicated to the calculations and other operations described herein. In still other embodiments, the IC may perform some operations based on execution of programming instructions read from ROM or RAM, with other operations hardwired into gates and other logic of IC. Further, the IC may output image data to a display buffer.

As described herein, the provided systems, apparatuses, methods, and computer-readable media may provide many advantages to target users, third-party software developers, and the like. For example, the provided systems, apparatuses, methods, and computer-readable media may provide a wide variety of high-quality fonts to choose from when designing and coding the user-interface and textual content of a software application 209. Further, in some embodiments, SDK 211 handles details for the third-party developer such as downloading fonts on a background thread to allow for a main thread to remain responsive, storing the fonts in the application's 209 sandbox 215, and activating the fonts. Additionally, in some embodiments, the fonts are optimized for the client device 103 where SDK 211 is supported such that the bandwidth required to download the font may be reduced, the amount of storage required to store the font on the client device 103 may be reduced, and/or the time required to render textual content in application 209 may be reduced. According to some aspects, SDK 211 may handle downloading the font(s) the first time application 209 is run which may reduce the size of the initial download of application 209. This may be particularly beneficial when client device 103 is, e.g., a mobile device 201, as loading resources on first execution (as opposed to packaging them in application 209) may be a recommended best practice for mobile device 201 applications 209. The provided systems, apparatuses, methods, and computer-readable media may provide many other advantages to target users, third-party software developers, and the like as will be apparent to one skilled in the art given the benefit of this disclosure.

Although specific examples of carrying out various features have been described, those skilled in the art will appreciate that there are numerous variations and permutations of the above-described systems and methods that are contained within the spirit and scope of the disclosure as set forth in the appended claims. Additionally, numerous other embodiments, modifications, and variations within the scope of the appended claims will occur to persons of ordinary skill in the art from a review of this disclosure.

## Claims

1. One or more computer readable media storing computer readable instructions that, when executed by a processor, cause an apparatus to:
receive a first request from an application operating in an operating system, wherein the first request is a request for a first font to be used in the application;
determine if a first font file comprising the first font is located in a secured storage space corresponding to the application;
in response to determining the first font file is not located in the secured storage space corresponding to the application:
establish a connection to a font service;
request the first font file from the font service; and
receive the first font file from the font service; and
activate the first font in the application.

2. The one or more computer readable media of claim 1, storing further instructions that, when executed by the processor, cause the apparatus to:
store the first font file in the secured storage space for future access by the application.

3. The one or more computer readable media of claim 2, storing further instructions that, when executed by the processor, cause the apparatus to:
receive a second request from the application operating in the operating system, wherein the second request is a request for the first font to be used in the application at time later than a time of the first request; and
retrieve the first font file from the secured storage space.

4. The one or more computer readable media of claims 1, 2 or 3, wherein the first font file is optimized by removing one of: font hinting and OpenType features not used by the operating system.

5. The one or more computer readable media of any preceding claim, wherein activating the first font in the application comprises rendering textual content of the application in the first font.

6. The one or more computer readable media of any preceding claim, wherein the apparatus is a mobile device, and wherein the connection to the font service is established via one of: a wireless internet connection and a cellular data connection.

7. The one or more computer readable media of any preceding claim, wherein the application comprises a software development kit and the connection to the font service is established between the software development kit and the font service.

8. The one or more computer readable media of claim 7, wherein the receiving the first font file from the font service is further in response to determining, by the software development kit, the first font file is included in a subscription agreement of a developer of the application.

9. One or more computer readable media storing computer readable instructions that, when executed by a processor, cause an apparatus to:
accept a connection from a client device;
receive a first request for a first font file to be used in an application on the client device;
retrieve a subscription corresponding to the application;
determine if the subscription corresponding to the application comprises access to the first font file; and
in response to determining the subscription corresponding to the application does comprise access to the first font file:
determine an operating system used by the client device;
optimize the first font file for the operating system used by the client device; and
transmit the first font file to the client device.

10. The one or more computer readable media of claim 9, wherein optimizing the first font file comprises reducing the size of the first font file.

11. The one or more computer readable media of claim 11, wherein optimizing the first font file further comprises removing one of: font hinting and OpenType features file not used by the operating system used by the client device, or optimizing the first font file further comprises retrieving, from a database, an optimized version of the first font file corresponding to the operating system used by the client device.

12. The one or more computer readable media of any of claims 9 to 11, wherein determining if the subscription corresponding to the application comprises access to the first font file comprises determining if the first font is included in a subscription agreement of a developer of the application.

13. The one or more computer readable media of any of claims 9 to 12, wherein the client device is a mobile device, and wherein the connection from the client device is accepted via one of: a wireless internet connection and a cellular data connection.

14. A mobile device comprising:
at least one processor; and
memory operatively coupled to the at least one processor and storing computer readable instructions that, when executed by the at least one processor, cause the mobile device to:
receive a first request from an application operating in an operating system of the mobile device, wherein the first request is for a first font to be used in the application;
determine if a first font file comprising the first font is located in a secured storage space corresponding to the application;
in response to determining the first font file is not located in the secured storage space:
establish a connection between a software development kit associated with the application and a font service;
request the first font file from the font service; and
receive, by the software development kit, the first font file from the font service, wherein the received first font file is optimized for the operating system;
store the first font file in the secured storage space; and
activate the first font in the application.

15. The mobile device of claim 14, wherein the memory stores further computer readable instructions that, when executed by the at least one processor, cause the mobile device to:
receive a second request from the application operating in the operating system, wherein the second request is a request for the first font to be used in the application at time later than a time of the first request; and
in response to receiving the second request, retrieve the first font file from the secured storage space.

16. The mobile device of claims 14 or 15, wherein the first font file is optimized by removing one of: font hinting and OpenType features not used by the operating system.

17. The mobile device of claims 14, 15 or 16, wherein activating the font in the application comprises rendering textual content of the application in the first font.

18. The mobile device of any of claims 14 to 17, wherein the receiving the first font file from the font service is further in response to determining, by the software development kit, the first font file is included in a subscription agreement of a developer of the application.
